# EUROPEAN PATENT APPLICATION

(11) **EP 4 523 937 A1**
(43) Date of publication of application: **19.03.2025**
(21) Application number: 23197390.0
(22) Date of filing: 14.09.2023
(51) Int. Cl.: B60K 11/08

(54) **GRILLE SHUTTER ASSEMBLY**

(71) Applicant: Motherson Innovations Company Ltd., London EC2N 2AX (GB)
(72) Inventor: Wahl, Marcel, 79268 Bötzingen (DE)
(74) Representative: Westphal, Mussgnug & Partner Patentanwälte mbB

(57) **Abstract**

The present disclosure relates to a grille shutter assembly (10) comprising a primary grille frame (20) with a primary opening (25) and at least one primary lamella (30) extending across at least a portion of the primary opening (25), the primary lamella (30) being movably mounted relative to the primary opening (25) of the primary grille frame (20) between an open position and a closed position, and further comprising an actuator (60) for moving the at least one primary lamella (30), wherein a secondary grille frame (40) is attachable to the primary grille frame (20), the secondary grille frame (40) comprising a secondary opening (45) and at least one secondary lamella (50) extending across at least a portion of the secondary opening (45), the secondary lamella (50) being movably mounted relative to the secondary opening (45) of the secondary grille frame (40) between an open position and a closed position, and wherein the at least one primary lamella (30) and the at least one secondary lamella (50) are couplable by a coupling bar (70) for simultaneously moving the at least one primary lamella (30) and the at least one secondary lamella (50) by means of the one actuator (60).

## Description

The present invention relates to a grille shutter assembly.

WO 2014 150143 A1 discloses a grille assembly for a vehicle which includes a grille frame and a plurality of lamellas. The grille frame includes an opening and the plurality of lamellas is mounted directly to the grille frame and extends across at least a portion of the opening. The lamellas are movable relative to the grille frame between an open position in which air is allowed to flow through the opening and a closed position in which airflow through the opening is restricted. CN 216580101 U discloses a grille assembly for a vehicle having lamellas which are arranged in a lower row and an upper row in the grille frame.

It is one task of one embodiment of the present disclosure to provide a grille shutter assembly, especially for a vehicle, that can flexibly be adapted to the geometry and design of the vehicle.

The task is solved by a grille shutter assembly comprising the features specified in claim 1.

Advantageous embodiments are the subject of the dependent claims.

According to an embodiment of the present invention a grille shutter assembly comprises a primary grille frame with a primary opening and at least one primary lamella extending across at least a portion of the primary opening, the primary lamella being movably mounted relative to the primary opening of the primary grille frame between an open position and a closed position, and further comprising an actuator for moving the at least one primary lamella, wherein a secondary grille frame is attachable, especially attached, to the primary grille frame, the secondary grille frame comprising a secondary opening and at least one secondary lamella extending across at least a portion of the secondary opening, the secondary lamella being movably mounted relative to the secondary opening of the secondary grille frame between an open position and a closed position, wherein the at least one primary lamella and the at least one secondary lamella are couplable, especially coupled, by a coupling bar for simultaneously moving the at least one primary lamella and the at least one secondary lamella by means of the one actuator.

In the open position air is allowed to flow through the respective opening and in the closed position airflow through the respective opening is restricted.

Such a grille shutter assembly allows using the primary grille frame stand alone in case a grille shutter assembly with just one row of at least one primary lamellas is desired, but allows attaching the secondary grille frame easily to the primary grille frame in case a grille shutter assembly with at least one lamella in two rows is desired. Therefore, with such a grille shutter assembly a modular grille shutter assembly is provided that can be adapted dependent on the geometry and design of the vehicle to be included in.

According to a further embodiment the secondary grille frame is removably attachable to the primary grille frame by screws or clips or is attachable to the primary grille frame by soldering or welding.

According to a further embodiment the primary grille frame comprises a plurality of primary lamellas arranged in a single row. When using a plurality of primary lamellas, each of the primary lamella might have a smaller surface and therefore the forces, for example of the airflow, acting on each of the primary lamellas are smaller.

According to a preferred embodiment the plurality of primary lamellas is coupled by a primary coupling bar for simultaneously moving the primary lamellas. Use of such a primary coupling bar facilitates moving the primary lamellas.

According to a further embodiment the secondary grille frame comprises a plurality of secondary lamellas arranged in a single row. When using a plurality of secondary lamellas, each of the secondary lamella might have a smaller surface and therefore the forces, for example of the airflow, acting on each of the secondary lamellas are smaller.

According to a preferred embodiment the plurality of secondary lamellas is coupled by a secondary coupling bar for simultaneously moving the secondary lamellas. Use of such a secondary coupling bar facilitates moving the secondary lamellas.

According to a further embodiment the coupling bar is L-shaped. This shape of the coupling bar enables a stable and space-saving connection.

According to a preferred embodiment the coupling bar has a first end and a second end, the first end being connected to the primary coupling bar and the second end being connected to the secondary coupling bar. Such a coupling bar may have a short extension.

According to a further preferred embodiment the coupling bar couples both the plurality of primary lamellas and the plurality of secondary lamellas for simultaneously moving the primary lamellas and secondary lamellas. This arrangement enables coupling of all lamellas in an efficient way.

According to a further embodiment the at least one primary lamella comprises a first end and a second end and a longitudinal axis, the primary grille frame comprises a first side and a second side, the first side and the second side being two opposite sides of the primary grille frame, wherein the first end of the primary lamella is attached to the first side and the second end of the primary lamella is attached to the second side, and wherein the secondary grille frame is attachable to the first side of the primary grille frame. In other words, the secondary grille frame is disposed in direction of the longitudinal axis of the at least one primary lamella. In such an arrangement, especially the secondary grille frame might be arranged above or below the primary grille frame when integrated in a vehicle.

According to a further preferred embodiment the at least one secondary lamella comprises a first end and a second end and a longitudinal axis, the secondary grille frame comprises a first side and a second side, the first side and the second side being two opposite sides of the secondary grille frame, wherein the first end of the secondary lamella is attached to the first side and the second end of the secondary lamella is attached to the second side, wherein the plurality of primary lamellas is coupled by the primary coupling bar close to the first end of the primary lamellas, the plurality of secondary lamellas is coupled by the secondary coupling bar close to the first end of the secondary lamellas, and wherein the first side of the secondary grille frame is attachable to the first side of the primary grille frame. In other words, the at least one primary lamella and the at least one secondary lamella are arranged with their first end facing each other which allows the coupling bar to have a short extension.

According to a preferred embodiment the actuator is arranged between the primary grille frame and the secondary grille frame, especially between the first side of the primary grille frame and the first side of the secondary grille frame. This arrangement of the actuator might enable small tolerances.

The present invention is described in detail with reference to the drawings attached wherein
- Figure 1: is a perspective view of a grille shutter assembly according to an embodiment of the present invention comprising a primary grille frame and a secondary grille frame,
- Figure 2: is a further perspective view of the grille shutter assembly according to fig. 1 in which the secondary grille frame is removed,
- Figure 3: is a further perspective view of the grille shutter assembly according to fig. 1 in which the secondary grille frame is illustrated above the primary grille frame,
- Figure 4: is an exploded view of the grille shutter assembly according to fig. 1,
- Figure 5: is a detailed view of the connection between the primary grille frame and the secondary grille frame of the grille shutter assembly according to fig. 1, and
- Figure 6: is a detailed view of the connection between the primary coupling bar of the primary grille frame and the secondary coupling bar of the secondary grille frame of the grille shutter assembly according to fig. 1.

The figures show different views of different components and embodiments of the present invention. Identical or similar parts are labelled with identical reference numbers in all figures. For clarity reasons not all reference numbers are included in all figures.

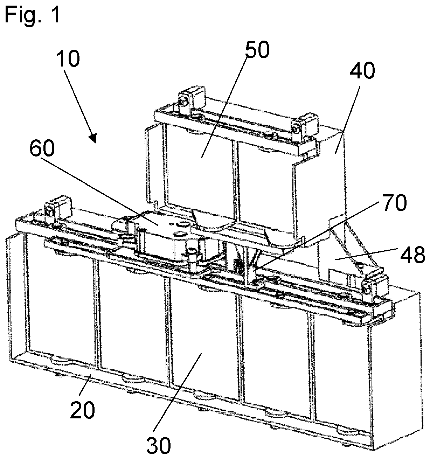

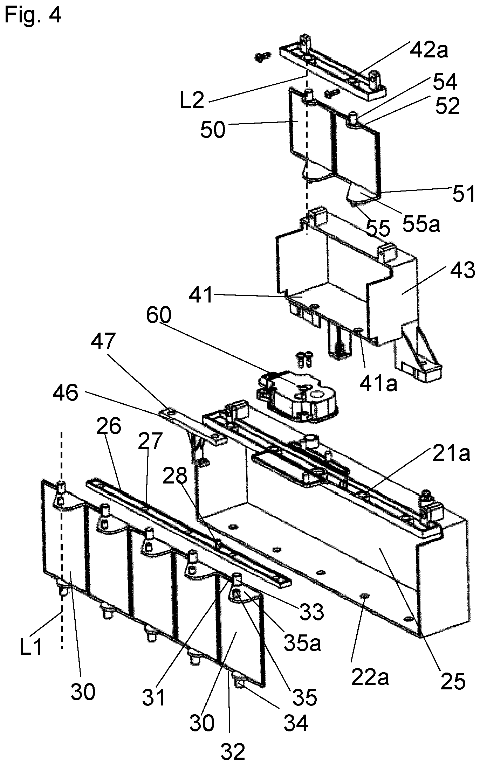

Figures 1 to 6 illustrate an embodiment of a grille shutter assembly 10 comprising a primary grille frame 20 with a primary opening 25 and at least one primary lamella 30 extending across at least a portion of the primary opening 25. The primary grille frame 20 comprises a first side 21 and a second side 22, the first side 21 and the second side 22 being two opposite sides of the primary grille frame 20. Further, the primary grille frame 20 comprises a third side 23 and a fourth side 24, the third side 23 and the fourth side 24 each connecting the first side 21 and the second side 22 and further being as well two opposite sides of the primary grille frame 20. Especially, the primary grille frame 20 can have a rectangular appearance. The primary grille frame 20 may be formed as a single piece. Alternatively, as shown in the figures, the primary grille frame 20 may be an assembly of several parts.

The primary lamella 30 is movably mounted relative to the primary opening 25 of the primary grille frame 20 between an open position, in which air is allowed to flow through the primary opening 25, and a closed position, in which airflow through the primary opening 25 is restricted (see fig. 1). To move between the open position and the closed position, the primary lamella 30 can turn around a longitudinal axis L1.

The primary lamella 30 comprises a first end 31 and a second end 32. The primary lamella 30 may be of rectangular shape to optimally cover the rectangular primary opening 25. In an embodiment, the grille shutter assembly 10, especially the primary grille frame 20, may comprise a plurality of primary lamellas 30, the primary lamellas 30 especially being arranged in a single row parallel to each other with their longitudinal axis L1 spaced apart. All primary lamellas 50 may have identical geometry. In a preferred embodiment, the primary lamellas 30 are arranged such that the primary opening 25 is covered to the largest possible extent when the primary lamellas 30 are in their closed position.

The primary lamella 30 can comprise a mounting pin 33 being arranged on the first end 31 and a further mounting pin 34 being arranged on the second end 32 of the primary lamella 30 and extending in opposite directions to engage in holes 21a, 22a arranged on two opposite sides, especially in the first side 21 and the second side 22, of the primary grille frame 20.

The plurality of primary lamellas 30 may be coupled by a primary coupling bar 26 for simultaneously moving the primary lamellas 30. For coupling the primary coupling bar 26 to the primary lamellas 30, a coupling pin 35 may be attached to the primary lamella 30, for example on a plate 35a attached sideways at the first end 31 of the primary lamella 30. The coupling pin 35 can engage in a hole 27 of the primary coupling bar 26.

An actuator 60 may be attached to the primary grille frame 20, the actuator 60 being connected to either the primary coupling bar 26 or directly to one of the lamellas. In both cases it is possible to move all of the primary lamellas 30 from the open position to the closed position or vice versa. In this embodiment, the actuator 60 is attached on the first side 21 of the primary grille frame 20, especially on the outside of the primary grille frame 20.

A secondary grille frame 40 is attachable to the primary grille frame 20, the secondary grille frame 40 having an secondary 45 and at least one secondary lamella 50 extending across at least a portion of the secondary opening 45. The secondary grille frame 40 comprises a first side 41 and a second side 42, the first side 41 and the second side 42 being two opposite sides of the secondary grille frame 40. Further, the secondary grille frame 40 comprises a third side 43 and a fourth side 44, the third side 43 and the fourth side 44 each connecting the first side 41 and the second side 42 and further being as well two opposite sides of the secondary grille frame 40. Especially, the secondary grille frame 40 can have a rectangular appearance.

The secondary lamella 50 is movably mounted relative to the secondary opening 45 of the secondary grille frame 40 between an open position, in which air is allowed to flow through the secondary opening 45, and a closed position, in which airflow through the secondary opening 45 is restricted (see fig. 1). To move between the open position and the closed position, the secondary lamella 50 can turn around a longitudinal axis L2.

The secondary lamella 50 comprises a first end 51 and a second end 52. The secondary lamella 50 may be of rectangular shape to optimally cover the rectangular secondary opening 45. In an embodiment, the secondary grille frame 40, may comprise a plurality of secondary lamellas 50, the secondary lamellas 50 especially being arranged in a single row parallel to each other with their longitudinal axis L2 spaced apart. All secondary lamellas 50 may have identical geometry. In a preferred embodiment, the secondary lamellas 50 are arranged such that the secondary opening 45 is covered to the largest possible extent when the secondary lamellas 50 are in their closed position.

The secondary lamella 50 can comprise a mounting pin (not visible) being arranged on the first end 51 and a further mounting pin 54 being arranged on the second end 52 of the secondary lamella 50 and extending in opposite directions to engage in holes 41a, 42a arranged on two opposite sides, especially in the first side 41 and the second side 42, of the secondary grille frame 40.

The plurality of secondary lamellas 50 may be coupled by a secondary coupling bar 46 for simultaneously moving the secondary lamellas 50. For coupling the secondary coupling bar 46 to the secondary lamellas 50, a coupling pin 55 may be attached to the secondary lamella 50, for example on a plate 55a attached sideways at the first end 51 of the secondary lamella 50. The coupling pin 55 can engage in a hole 47 of the secondary coupling bar 46.

Especially, the secondary lamella 50 can have a geometry identical to the geometry of the primary lamella 30.

The at least one primary lamella 30 and the at least one secondary lamella 50 are couplable by a coupling bar 70 for simultaneously moving the at least one primary lamella 30 and the at least one secondary lamella 50 by means of the one actuator 60. In case of a plurality of primary lamellas 30 and a plurality of secondary lamellas 50, the coupling bar 70 may be connected to both the primary coupling bar 26 and the secondary coupling bar 46 or may couple directly both the plurality of primary lamellas 30 and the plurality of secondary lamellas 50 for simultaneously moving the plurality of primary lamellas 30 and the plurality of secondary lamellas 50 by means of the one actuator 60.

For example, the coupling bar 70 may be L-shaped.

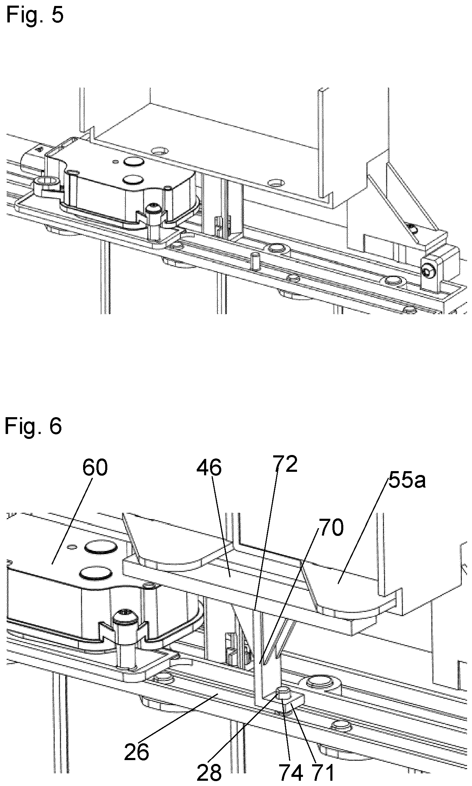

In the embodiment illustrated in the figures, the coupling bar 70 has a first end 71 and a second end 72, the first end 71 being connected to the primary coupling bar 26, in this example by means of a pin 28 attached at the primary coupling bar 26 which engages in a hole 74 attached at the first end 71 of the coupling bar 70, and the second end 72 being connected to the secondary coupling bar 46, in this example the coupling bar 70 and the secondary coupling bar 46 being formed in one piece (see figure 6).

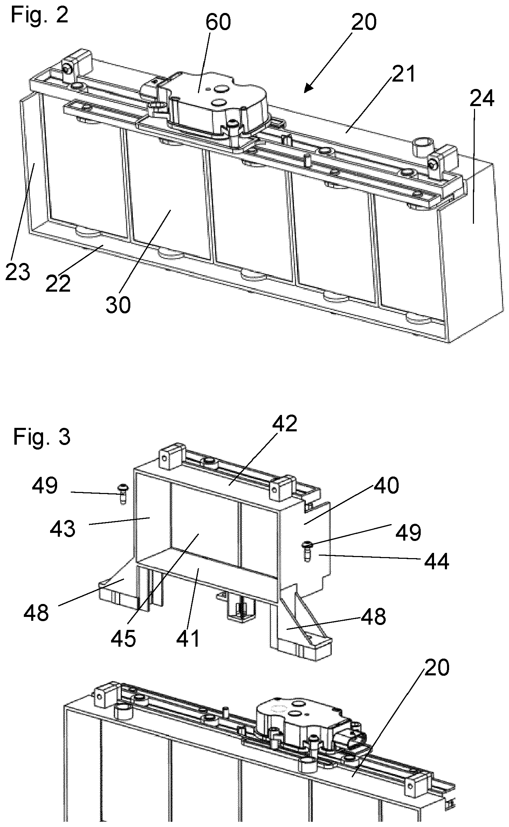

The secondary grille frame 40 may be attachable to the first side 21 of the primary grille frame 20. In other words, the secondary grille frame 40 is disposed in direction of the longitudinal axis L1 of the at least one primary lamella 30. Especially, the secondary grille frame 40 might be arranged above the primary grille frame 20 (see figures 1 and 3).

Preferably, the first side 41 of the secondary grille frame 40 is attachable to the first side 21 of the primary grille frame 20. In this arrangement, the distance between the primary coupling bar 26 and the secondary coupling bar 46 might be smallest.

The secondary grille frame 40 may be removably attachable to the primary grille frame 20 by screws 49 as shown in the figures or clips or alternatively may be attachable to the primary grille frame 20 by soldering or welding. For attachment, in this embodiment the secondary grille frame 40 comprises two distance feet 48, preferably one of those attached at the corner between the first side 41 and the third side 43 and the other one of those attached at the corner between the first side 41 and the fourth side 44 of the secondary grille frame 40. The actuator 60 may be placed between the primary grille frame 20 and the secondary grille frame 40, especially between the first side 21 of the primary grille frame 20 and the first side 41 of the secondary grille frame 40, most preferred between the two distance feet 48.

### List of reference numbers

- 10: grille frame assembly
- 20: primary grille frame
- 21: first side
- 22: second side
- 23: third side
- 24: fourth side
- 25: primary opening
- 26: primary coupling bar
- 27: hole
- 28: pin
- 30: primary lamella
- 31: first end
- 32: second end
- 33: mounting pin
- 34: mounting pin
- 35: coupling pin
- 35a: plate
- 40: secondary grille frame
- 41: first side
- 42: second side
- 43: third side
- 44: fourth side
- 45: secondary opening
- 46: secondary coupling bar
- 47: hole
- 48: distance foot
- 49: screw
- 50: primary lamella
- 51: first end
- 52: second end
- 54: mounting pin
- 55: coupling pin
- 55a: plate
- 60: actuator
- 70: coupling bar
- 71: first end
- 72: second end
- 74: hole
- L1: longitudinal axis
- L2: longitudinal axis

## Claims

1. Grille shutter assembly (10) comprising a primary grille frame (20) with a primary opening (25) and at least one primary lamella (30) extending across at least a portion of the primary opening (25), the primary lamella (30) being movably mounted relative to the primary opening (25) of the primary grille frame (20) between an open position and a closed position, and further comprising an actuator (60) for moving the at least one primary lamella (30),
**characterized in that** a secondary grille frame (40) is attachable to the primary grille frame (20), the secondary grille frame (40) comprising a secondary opening (45) and at least one secondary lamella (50) extending across at least a portion of the secondary opening (45), the secondary lamella (50) being movably mounted relative to the secondary opening (45) of the secondary grille frame (40) between an open position and a closed position, wherein the at least one primary lamella (30) and the at least one secondary lamella (50) are couplable by a coupling bar (70) for simultaneously moving the at least one primary lamella (30) and the at least one secondary lamella (50) by means of the one actuator (60).

2. Grille shutter assembly according to claim 1,
**characterized in that** the secondary grille frame (40) is removably attachable to the primary grille frame (20) by screws (49) or clips or is attachable to the primary grille (frame 20) by soldering or welding.

3. Grille shutter assembly according to claim 1 or 2,
**characterized in that** the primary grille frame (20) comprises a plurality of primary lamellas (30) arranged in a single row.

4. Grille shutter assembly according to claim 3,
**characterized in that** the plurality of primary lamellas (30) is coupled by a primary coupling bar (26) for simultaneously moving the primary lamellas (30) .

5. Grille shutter assembly according to one of the preceding claims,
**characterized in that** the secondary grille frame (40) comprises a plurality of secondary lamellas (50) arranged in a single row.

6. Grille shutter assembly according to claim 5,
**characterized in that** the plurality of secondary lamellas (50) is coupled by a secondary coupling bar (46) for simultaneously moving the secondary lamellas (50).

7. Grille shutter assembly according to one of the preceding claims,
**characterized in that** the coupling bar (70) is L-shaped.

8. Grille shutter assembly according to one of the preceding claims,
**characterized in that** the coupling bar (70) has a first end (71) and a second end (72), the first end (71) being connected to the primary coupling bar (26) and the second end (72) being connected to the secondary coupling bar (46).

9. Grille shutter assembly according to claims 3 and 5,
**characterized in that** the coupling bar (70) couples both the plurality of primary lamellas (30) and the plurality of secondary lamellas (50) for simultaneously moving the primary lamellas (30) and secondary lamellas (50).

10. Grille shutter assembly according to one of the preceding claims,
**characterized in that** the at least one primary lamella (30) comprises a first end (31) and a second end (32) and a longitudinal axis (L1), the primary grille frame (20) comprises a first side (21) and a second side (22), the first side (21) and the second side (22) being two opposite sides of the primary grille frame (20), wherein the first end (31) of the primary lamella (30) is attached to the first side (21) and the second end (32) of the primary lamella (30) is attached to the second side (22), and wherein the secondary grille frame (40) is attachable to the first side (21) of the primary grille frame (20).

11. Grille shutter assembly according to claim 9,
**characterized in that** the at least one secondary lamella (50) comprises a first end (51) and a second end (52) and a longitudinal axis (L2), the secondary grille frame (40) comprises a first side (41) and a second side (42), the first side (41) and the second side (42) being two opposite sides of the secondary grille frame (40), wherein the first end (51) of the secondary lamella (50) is attached to the first side (41) and the second end (52) of the secondary lamella (50) is attached to the second side (42), wherein the plurality of primary lamellas (30) is coupled by the primary coupling bar (26) close to the first end (31) of the primary lamellas (30), the plurality of secondary lamellas (50) is coupled by the secondary coupling bar (46) close to the first end (51) of the secondary lamellas (50), and wherein the first side (41) of the secondary grille frame (40) is attachable to the first side (21) of the primary grille frame (20).

12. Grille shutter assembly according to one of the preceding claims,
**characterized in that** the actuator (60) is arranged between the primary grille frame (20) and the secondary grille frame (40), especially between the first side (21) of the primary grille frame (20) and the first side (41) of the secondary grille frame (40).
